# EUROPEAN PATENT APPLICATION

(11) **EP 3 943 316 A1**
(43) Date of publication of application: **26.01.2022**
(21) Application number: 20774292.5
(22) Date of filing: 06.03.2020
(51) Int. Cl.: B60C 1/00, C08K 5/42, C08K 7/08, C08L 7/00, C08L 9/00, C08L 15/00, B60C 11/00, C08K 3/00

(54) **STUDLESS TIRE RUBBER COMPOSITION AND STUDLESS TIRE USING SAME**

(30) Priority: 18.03.2019 JP 2019049823; 02.10.2019 JP 2019181981
(71) Applicant: The Yokohama Rubber Co., Ltd., Tokyo 105-8685 (JP)
(72) Inventor: NAKAGAWA, Ryutaro, Hiratsuka-shi, Kanagawa 254-8601 (JP); AKAHORI, Yayoi, Hiratsuka-shi, Kanagawa 254-8601 (JP)
(74) Representative: Dilg, Haeusler, Schindelmann Patentanwaltsgesellschaft mbH
(86) International application number: PCT/JP2020/009618
(87) International publication number: WO 2020/189328

(57) **Abstract**

In an embodiment of the present invention, to obtain a studless tire rubber composition that can improve performance on ice while delay in a vulcanization rate is suppressed and strength at break is maintained, per 100 parts by mass of a diene rubber containing 30 parts by mass or more of a polybutadiene rubber, 20 parts by mass or more of an inorganic filler and from 10 to 40 mass%, with respect to the inorganic filler, of basic magnesium sulfate inorganic fibers having an average diameter of less than 1 µm are blended.

## Description

### Technical Field

The present invention relates to a studless tire rubber composition and a studless tire using the same, and particularly relates to a studless tire rubber composition that can improve performance on ice while strength at break is maintained and a studless tire using the same.

### Background Art

Many means for improving performance on ice (braking ability on ice) of studless tires have been proposed. For example, a method of improving friction on ice by blending a hard foreign material with a hollow polymer in a rubber and by removing a water film formed on a surface of ice by forming micro-recesses and protrusions on a rubber surface by the blending has been known (e.g., see Patent Document 1).

However, when a hollow polymer is blended, a cavity is formed in a tread rubber, and thus occurs a problem of reduction in rubber strength.

Furthermore, although there is also a method that increases roughness of an entire rubber by blending a foaming agent or the like in a rubber to improve performance on ice, this method has a problem of reduction in wear resistance.

Furthermore, in recent years, a blended amount of silica in a rubber has been increased to enhance wet grip performance; however, this also cause a problem of slowing down the vulcanization rate and thus sufficient increase in the strength at break being not achieved within a predetermined time.

### Citation List

### Patent Literature

Patent Document 1: JP H11-35736 A

### Summary of Invention

### Technical Problem

An object of the present invention is to provide a studless tire rubber composition that can improve performance on ice while delay in a vulcanization rate is suppressed and strength at break is maintained, and a studless tire using the same.

### Solution to Problem

As a result of diligent research, the inventors of the present invention found that the problems described above can be solved by blending specific amounts of an inorganic filler and basic magnesium sulfate inorganic fibers having a specific shape with respect to a diene rubber having a specific composition, and thus completed the present invention.

The present invention is described below.

1. A studless tire rubber composition including: per 100 parts by mass of a diene rubber containing 30 parts by mass or more of a polybutadiene rubber, 20 parts by mass or more of an inorganic filler, and
   with respect to the inorganic filler, from 10 to 40 mass% of basic magnesium sulfate inorganic fibers having an average diameter of less than 1 µm.
2. The studless tire rubber composition according to 1 above, where an aspect ratio of the basic magnesium sulfate inorganic fibers is 5 or higher.
3. The studless tire rubber composition according to 2 above, where an average diameter of the basic magnesium sulfate inorganic fibers is 0.5 µm or more and less than 1 µm and an average length is from 5 µm to 50 µm.
4. The studless tire rubber composition according to any one of 1 to 3 above, where a solubility of the basic magnesium sulfate inorganic fibers in water at 0°C is 0.05 g/L or less.
5. The studless tire rubber composition according to any one of 1 to 4 above, where the polybutadiene rubber has a functional group at a terminal.
6. The studless tire rubber composition according to any one of 1 to 5 above, where an average glass transition temperature of the studless tire rubber composition is -60°C or lower.
7. The studless tire rubber composition according to any one of 1 to 6 above, the studless tire rubber composition obtained by blending, per 100 parts by mass of the diene rubber containing 30 parts by mass or more of the polybutadiene rubber, 20 parts by mass or more of the inorganic filler and, with respect to the inorganic filler, from 10 to 40 mass% of the basic magnesium sulfate inorganic fibers having the average diameter of less than 1 µm, and by mixing at a temperature of 120°C or higher for 1 minute or longer.
8. A studless tire using the studless tire rubber composition according to any one of 1 to 7 above in a tread.

### Advantageous Effects of Invention

Because the studless tire rubber composition according to an embodiment of the present invention contains, per 100 parts by mass of a diene rubber containing 30 parts by mass or more of a polybutadiene rubber, 20 parts by mass or more of an inorganic filler and, with respect to the inorganic filler, from 10 to 40 mass% of basic magnesium sulfate inorganic fibers having an average diameter of less than 1 µm, performance on ice can be improved while delay in a vulcanization rate is suppressed and strength at break is maintained.

Furthermore, the studless tire using the rubber composition according to an embodiment of the present invention in a tread has excellent performance on ice as well as excellent wear resistance because adequate strength at break can be also maintained.

### Description of Embodiments

The present invention will be described in further detail below.

### Diene Rubber

The diene rubber used in an embodiment of the present invention contains a polybutadiene rubber (BR) from the perspective of improving performance on ice, and is required to contain 30 parts by mass or more of the BR when the entire amount of the diene rubber is 100 parts by mass. Note that, in 100 parts by mass of the diene rubber, 40 parts by mass or more of the BR is preferably contained.

Furthermore, in an embodiment of the present invention, use of a butadiene rubber having a modified terminal (terminal-modified BR) is preferred. The terminal-modified BR is a BR having its terminal modified with a functional group, and a terminal-modified BR having such a structure exhibits effects of enhancing dispersibility of the basic magnesium sulfate inorganic fibers and enhancing performance on ice. From the perspective of enhancing such effects, the functional group is preferably at least one functional group selected from a hydroxy group, an amino group, an alkoxyl group, and an epoxy group.

The terminal-modified BR can be prepared by a known method. For example, an example is a method of obtaining by performing 1,3-butadiene polymerization by using a saturated hydrocarbon-based compound as a solvent and an organolithium compound as a polymerization initiator, and then performing modification reaction by a compound having the functional group that can be reacted with an active terminal of the obtained butadiene polymer. Note that a commercially available terminal-modified BR can be also used, and examples thereof include Nipol BR1250H (trade name), available from Zeon Corporation, as a butadiene rubber in which a terminal is modified with an amino group.

Note that, in addition to the BR, an optional diene rubber that can be blended in a rubber composition may be used as necessary and, for example, natural rubber (NR), styrene-butadiene copolymer rubber (SBR), acrylonitrilebutadiene copolymer rubber (NBR), and ethylene-propylene-diene terpolymer (EPDM) may be blended. In the diene rubber used in an embodiment of the present invention, the molecular weight and the microstructure thereof are not particularly limited. The diene rubber may be terminal-modified with an amine, amide, silyl, alkoxysilyl, carboxyl, or hydroxyl group or may be epoxidized.

Note that a synthetic isoprene rubber (IR) is included in NR according to an embodiment of the present invention.

Furthermore, in an embodiment of the present invention, the diene rubber preferably contains an NR, and in this embodiment, regarding the blending proportions of the BR and the NR, the BR is from 30 to 70 parts by mass and the NR is from 30 to 70 parts by mass when the entire amount of the diene rubber is 100 parts by mass.

### Inorganic Filler

Examples of the inorganic filler used in an embodiment of the present invention include silica, clay, mica, talc, Shirasu, calcium carbonate, magnesium carbonate, aluminum hydroxide, and barium sulfate.

Note that, in the present specification, the basic magnesium sulfate inorganic fibers described below is not included in the inorganic filler.

### Basic Magnesium Sulfate Inorganic Fiber

The basic magnesium sulfate inorganic fibers used in an embodiment of the present invention can be obtained by, for example, hydrothermal synthesis by using magnesium hydroxide produced from sea water and magnesium sulfate as raw materials, and are known.

The basic magnesium sulfate can have the following structure. MgSO₄·5Mg(OH)₂·3H₂O

The basic magnesium sulfate inorganic fibers used in an embodiment of the present invention are required to have an average diameter of less than 1 µm. When the average diameter is 1 µm or more, strength at break is reduced and wear resistance is deteriorated. The average diameter is preferably 0.5 µm or more and less than 1 µm.

Furthermore, the basic magnesium sulfate inorganic fibers used in an embodiment of the present invention is preferably in a whisker form having an aspect ratio (average length/average diameter) of 5 or higher, from the perspective of improving effects according to an embodiment of the present invention. The aspect ratio is more preferably from 8 to 90. Even in an embodiment having this aspect ratio, the average diameter of the basic magnesium sulfate inorganic fibers is preferably 0.5 µm or more and less than 1 µm. Furthermore, the average length is preferably from 5 µm to 50 µm, and more preferably from 7 µm to 35 µm.

Note that the average diameter and the average length of the basic magnesium sulfate inorganic fibers can be calculated by average values of each major axis and minor axis of 100 particles measured based on a magnified image by a scanning electron microscope (SEM).

It is presumed that the basic magnesium sulfate inorganic fibers used in an embodiment of the present invention have scratching effect on an ice surface and, by this, performance on ice is enhanced.

From this perspective, the basic magnesium sulfate inorganic fibers used in an embodiment of the present invention preferably has poor solubility in water. Specifically, the basic magnesium sulfate inorganic fibers used in an embodiment of the present invention has a solubility in water at 0°C of preferably 0.05 g/L or less, and more preferably 0.04 g/L or less.

The basic magnesium sulfate inorganic fibers used in an embodiment of the present invention may be synthesized in accordance with a known method but can be commercially obtained as MOS-HIGE series available from Ube Material Industries, Ltd.

### Compounding Ratio of Rubber Composition

The rubber composition according to an embodiment of the present invention contains, per 100 parts by mass of the diene rubber, 20 parts by mass or more of the inorganic filler and, with respect to the inorganic filler, from 10 to 40 mass% of the basic magnesium sulfate inorganic fibers.

When the blended amount of the inorganic filler is less than 20 parts by mass, wear resistance is deteriorated.

When the blended amount of the basic magnesium sulfate inorganic fibers is less than 10 mass% with respect to the amount of the inorganic filler, performance on ice is deteriorated. On the other hand, when the blended amount is more than 40 mass%, strength at break is deteriorated.

The blended amount of the inorganic filler is preferably from 25 to 100 parts by mass, and more preferably from 30 to 80 parts by mass, per 100 parts by mass of the diene rubber.

The blended amount of the basic magnesium sulfate inorganic fibers is preferably from 0.1 to 50 mass%, and more preferably from 1 to 45 mass%, with respect to the amount of the inorganic filler.

### Other Components

In addition to the aforementioned components, the rubber composition according to an embodiment of the present invention can also contain various additives that are commonly added for rubber compositions, such as vulcanizing and crosslinking agents, vulcanizing and crosslinking accelerators, silane coupling agents, zinc oxide, carbon black, anti-aging agents, plasticizers, and thermally expandable microcapsules. The additives may be kneaded in according to a common method to form a composition and used in vulcanizing or crosslinking. Blended amounts of these additives may be any standard blended amount in the related art, so long as the object of the present invention is not hindered.

The rubber composition according to an embodiment of the present invention has an average glass transition temperature (average Tg) of preferably -60°C or lower. By specifying the average Tg to such a manner, performance on ice is improved.

Note that the average Tg in the present specification is a value calculated based on a sum of products each obtained by multiplying a glass transition temperature of each component by a weight fraction of the component, i.e., a weighted average. Note that the total of the weight fractions of the components at the time of calculation is taken as 1.0. Furthermore, for the glass transition temperature, a thermograph is measured by differential scanning calorimetry (DSC) at a rate of temperature increase of 20°C/min, and the temperature at the midpoint of the transition region is defined as the glass transition temperature.

Furthermore, the components each refer to diene rubbers, oils, and resins. Note that the oils and the resins may be not contained in the rubber composition.

More preferable average Tg is -62°C or lower.

Furthermore, the rubber composition according to an embodiment of the present invention is suitable for producing a pneumatic tire according to a known method of producing pneumatic tires, and is preferably produced through Step (1) below.

Step (1): A step in which, per 100 parts by mass of the diene rubber, 20 parts by mass or more of the inorganic filler and, with respect to the inorganic filler, from 10 to 40 mass% of the basic magnesium sulfate inorganic fibers having the average diameter of less than 1 µm are blended, and then these components are mixed at a temperature of 120°C or higher for 1 minute or longer.

By performing this Step (1), delay in the vulcanization rate can be further suppressed, and performance on ice can be improved while strength at break is maintained. Note that the vulcanization components such as vulcanizing agents, crosslinking agents, vulcanization accelerators, and crosslinking accelerators are preferably added and mixed to the rubber composition after the completion of Step (1).

In Step (1) above, the mixing temperature of each of the components is more preferably from 130 to 170°C, and the mixing time of each of the components is more preferably from 1 minute to 20 minutes.

The rubber composition according to an embodiment of the present invention is preferably applied to a tread, and especially a cap tread, of a studless tire.

### Examples

The present invention will be described in further detail by way of examples and comparative examples, but the present invention is not limited by these examples.

### Examples 1 to 8 and Comparative Examples 1 to 7

### Preparation of Sample

According to the composition (parts by mass) listed in Table 1, the components other than the vulcanization accelerator and the sulfur were kneaded at the mixing temperature and for the mixing time listed in Table 1 below in a 1.7-L sealed Banbury mixer as Step (1). Then, the kneaded product was discharged from the mixer to the outside and cooled to room temperature. Thereafter, kneading was further performed by adding the vulcanization accelerator and the sulfur in the identical Banbury mixer, and a rubber composition was obtained. Next, the rubber composition thus obtained was pressure vulcanized in a predetermined mold at 160°C for 20 minutes to obtain a vulcanized rubber test piece, and then the test methods shown below were used to measure the physical properties of the vulcanized rubber test piece.

Performance on ice: The vulcanized rubber test piece was affixed to a flat cylindrical rubber base and a coefficient of friction on ice was measured using an inside drum on-ice friction tester. The measurement temperature was - 1.5°C, the load was 5.5 kg/cm³, and the drum rotation speed was 25 km/h. The results are expressed as index values with Comparative Example 1 being assigned the index value of 100. A larger index value indicates better friction force between the rubber and ice and superior performance on ice.

Strength at break: In accordance with JIS K 6251, a dumbbell-shaped No. 3 sample piece was punched out from the vulcanized rubber test piece and subjected to a tensile test at a tensile speed of 500 mm/min, and the elongation at break (%) was measured. The results are shown as an index with the value of Comparative Example 1 being 100. A larger index value indicates superior strength at break.

The results are shown in Table 1.

**[Table 1-1]**

| | Comparative Example 1 | Comparative Example 2 | Comparative Example 3 | Comparative Example 4 | Example 1 |
|---|---|---|---|---|---|
| NR ^{∗}1 | 55 | 55 | 55 | 55 | 55 |
| BR ^{∗}2 | 45 | 45 | 45 | 45 | 45 |
| Carbon black ^{∗}3 | 15 | 15 | 15 | 15 | 15 |
| Silica ^{∗}4 | 60 | 50 | 40 | 58 | 53 |
| Basic magnesium sulfate inorganic fiber 1 ^{∗}5 | - | - | 20 | 2 | 7 |
| Water-soluble magnesium sulfate inorganic fiber ^{∗}6 | - | 10 | - | - | - |
| Basic magnesium sulfate inorganic fiber 2 ^{∗}7 | - | - | - | - | - |
| Water-soluble magnesium sulfate inorganic fiber 2 ^{∗}8 | - | - | - | - | - |
| Water-soluble magnesium sulfate inorganic fiber 3 ^{∗}9 | - | - | - | - | - |
| Silane coupling agent ^{∗}10 | 4.5 | 4.5 | 4.5 | 4.5 | 4.5 |
| Oil ^{∗}11 | 20 | 20 | 20 | 20 | 20 |
| Anti-aging agent ^{∗}12 | 3 | 3 | 3 | 3 | 3 |
| Wax ^{∗}13 | 1 | 1 | 1 | 1 | 1 |
| Sulfur ^{∗}14 | 2 | 2 | 2 | 2 | 2 |
| Vulcanization accelerator ^{∗}15 | 1.5 | 1.5 | 1.5 | 1.5 | 1.5 |
| Amount of inorganic fiber with respect to silica (mass%) | 0 | 20 | 50 | 3 | 13 |
| Average Tg of rubber composition (°C) | -67 | -67 | -67 | -67 | -67 |
| Mixing temperature in Step (1) (°C) | 150 | 150 | 150 | 150 | 150 |
| Mixing time in Step (1) (minute) | 2 | 2 | 2 | 2 | 2 |
| Measurement result | | | | | |
| Strength at break | 100 | 95 | 95 | 100 | 100 |
| Performance on ice | 100 | 110 | 145 | 100 | 112 |

**[Table 1-2]**

| | Example 2 | Example 3 | Comparative Example 5 | Example 4 | Example 5 |
|---|---|---|---|---|---|
| NR ^{∗}1 | 55 | 55 | 55 | 55 | 55 |
| BR ^{∗}2 | 45 | 45 | 45 | 45 | 45 |
| Carbon black ^{∗}3 | 15 | 15 | 15 | 15 | 15 |
| Silica ^{∗}4 | 50 | 45 | 80 | 70 | 60 |
| Basic magnesium sulfate inorganic fiber 1 ^{∗}5 | 10 | 15 | - | 10 | 20 |
| Water-soluble magnesium sulfate inorganic fiber ^{∗}6 | - | - | - | - | - |
| Basic magnesium sulfate inorganic fiber 2 ^{∗}7 | - | - | - | - | - |
| Water-soluble magnesium sulfate inorganic fiber 2 ^{∗}8 | - | - | - | - | - |
| Water-soluble magnesium sulfate inorganic fiber 3 ^{∗}9 | - | - | - | - | - |
| Silane coupling agent ^{∗}10 | 4.5 | 4.5 | 4.5 | 4.5 | 4.5 |
| Oil ^{∗}11 | 20 | 20 | 20 | 20 | 20 |
| Anti-aging agent ^{∗}12 | 3 | 3 | 3 | 3 | 3 |
| Wax ^{∗}13 | 1 | 1 | 1 | 1 | 1 |
| Sulfur ^{∗}14 | 2 | 2 | 2 | 2 | 2 |
| Vulcanization accelerator ^{∗}15 | 1.5 | 1.5 | 1.5 | 1.5 | 1.5 |
| Amount of inorganic fiber with respect to silica (mass%) | 20 | 33 | 0 | 14 | 33 |
| Average Tg of rubber composition (°C) | -67 | -67 | -67 | -67 | -67 |
| Mixing temperature in Step (1) (°C) | 150 | 150 | 150 | 150 | 150 |
| Mixing time in Step (1) (minute) | 2 | 2 | 2 | 2 | 2 |
| Measurement result | | | | | |
| Strength at break | 100 | 100 | 100 | 100 | 100 |
| Performance on ice | 118 | 128 | 100 | 120 | 130 |

**[Table 1-3]**

| | Example 6 | Example 7 | Example 8 | Comparative Example 6 | Comparative Example 7 |
|---|---|---|---|---|---|
| NR ^{∗}1 | 55 | 55 | 55 | 55 | 55 |
| BR ^{∗}2 | 45 | 45 | 45 | 45 | 45 |
| Carbon black ^{∗}3 | 15 | 15 | 15 | 15 | 15 |
| Silica ^{∗}4 | 50 | 50 | 50 | 50 | 50 |
| Basic magnesium sulfate inorganic fiber 1 ^{∗}5 | 5 | 5 | - | - | - |
| Water-soluble magnesium sulfate inorganic fiber ^{∗}6 | - | - | - | 10 | 10 |
| Basic magnesium sulfate inorganic fiber 2 ^{∗}7 | - | - | 10 | - | - |
| Water-soluble magnesium sulfate inorganic fiber 2 ^{∗}8 | - | - | - | 10 | - |
| Water-soluble magnesium sulfate inorganic fiber 3 ^{∗}9 | - | - | - | - | 10 |
| Silane coupling agent ^{∗}10 | 4.5 | 4.5 | 4.5 | 4.5 | 4.5 |
| Oil ^{∗}11 | 20 | 20 | 20 | 20 | 20 |
| Anti-aging agent ^{∗}12 | 3 | 3 | 3 | 3 | 3 |
| Wax ^{∗}13 | 1 | 1 | 1 | 1 | 1 |
| Sulfur ^{∗}14 | 2 | 2 | 2 | 2 | 2 |
| Vulcanization accelerator ^{∗}15 | 1.5 | 1.5 | 1.5 | 1.5 | 1.5 |
| Amount of inorganic fiber with respect to silica (mass%) | 10 | 10 | 20 | 20 | 20 |
| Average Tg of rubber composition (°C) | -67 | -67 | -67 | -67 | -67 |
| Mixing temperature in Step (1) (°C) | 80 | 150 | 150 | 150 | 150 |
| Mixing time in Step (1) (minute) | 2 | 0.5 | 2 | 2 | 2 |
| Measurement result | | | | | |
| Strength at break | 98 | 99 | 100 | 93 | 96 |
| Performance on ice | 113 | 113 | 118 | 110 | 110 |

^{∗}1: NR (TSR20)
^{∗}2: Terminal-modified BR (Nipol BR1250H, available from Zeon Corporation)
^{∗}3: Carbon black (Show Black N339, available from Cabot Japan K.K.)
^{∗}4: Silica (Zeosil 1165MP, available from Rhodia; CTAB specific surface area: 159 m²/g)
^{∗}5: Basic magnesium sulfate inorganic fiber 1 (MOS-HIGE, available from Ube Material Industries, Ltd.; including fibers having diameters of 0.4 µm to 1.5 µm; average diameter: 0.9 µm; average length: 20 µm; aspect ratio: 22; solubility in water at 0°C: 0.03 g/L)
^{∗}6: Water-soluble magnesium sulfate inorganic fiber 1 (trade name: magnesium sulfate, available from Kanto Chemical Co., Ltd.; average diameter: 100 µm; average length: 250 µm; aspect ratio: 2.5; solubility in water at 0°C: 31 g/L)
^{∗}7: Basic magnesium sulfate inorganic fiber 2 (MOS-HIGE, available from Ube Material Industries, Ltd.; including fibers having diameters of 0.4 µm to 1.5 µm; average diameter: 0.9 µm; average length: 10 µm; aspect ratio: 10; solubility in water at 0°C: 0.03 g/L)
^{∗}8: Water-soluble magnesium sulfate inorganic fiber 2 (trade name: USN-00, available from Umai Chemical Co., Ltd.; hyperfine magnesium sulfate; median particle size (median diameter): 3 µm; solubility in water at 0°C: 31 g/L)
^{∗}9: Water-soluble magnesium sulfate inorganic fiber 3 (trade name: MN-00, available from Umai Chemical Co., Ltd.; magnesium sulfate; median particle size (median diameter): 75 µm; solubility in water at 0°C: 31 g/L)
^{∗}10: Silane coupling agent (Si69, available from Evonik Degussa)
^{∗}11: Oil (Extract No. 4S, available from Showa Shell Sekiyu K.K.)
^{∗} 12: Anti-aging agent (SANTOFLEX 6PPD, available from Solutia Europe)
^{∗}13: Wax (Paraffin Wax, available from Ouchi Shinko Chemical Industrial Co., Ltd.)
^{∗}14: Sulfur (Golden Flower oil treated sulfur powder, available from Tsurumi Chemical Industry Co., Ltd.)
^{∗}15: Vulcanization accelerator (NOCCELER CZ-G available from Ouchi Shinko Chemical Industrial Co., Ltd.)

Based on the results shown in Table 1, it was found that, because the rubber compositions of Examples each contained, per 100 parts by mass of a diene rubber containing 30 parts by mass or more of a polybutadiene rubber, 20 parts by mass or more of an inorganic filler and, with respect to the inorganic filler, from 10 to 40 mass% of basic magnesium sulfate inorganic fibers having an average diameter of less than 1 µm, performance on ice was improved while strength at break was maintained compared to those of Comparative Example 1. Especially, the rubber compositions of Examples 1 to 5 and 8 that were produced through the conditions of Step (1) described above each improved performance on ice while strength at break was maintained. Note that, because the strength at break was maintained, it was found that the vulcanization rate was not delayed.

Because Comparative Example 2 was an example in which water-soluble magnesium sulfate inorganic fibers except the basic magnesium sulfate inorganic fibers having an average diameter of less than 1 µm were used, the strength at break was deteriorated compared to that of Comparative Example 1.

Because Comparative Example 3 was an example in which the blended amount of the basic magnesium sulfate inorganic fibers was more than the upper limit according to an embodiment of the present invention, the strength at break was deteriorated compared to that of Comparative Example 1.

Because Comparative Example 4 was an example in which the blended amount of the basic magnesium sulfate inorganic fibers was less than the lower limit according to an embodiment of the present invention, similar results as those of Comparative Example 1 were obtained.

Because Comparative Example 5 was an example in which the silica amount was simply increased in blending of Comparative Example 1, similar results as those of Comparative Example 1 were obtained.

Because Comparative Examples 6 and 7 were each an example in which water-soluble magnesium sulfate inorganic fibers except the basic magnesium sulfate inorganic fibers having an average diameter of less than 1 µm were used, the strength at break was deteriorated compared to that of Comparative Example 1.

## Claims

1. A studless tire rubber composition, comprising:
per 100 parts by mass of a diene rubber containing 30 parts by mass or more of a polybutadiene rubber,
20 parts by mass or more of an inorganic filler, and
with respect to the inorganic filler, from 10 to 40 mass% of basic magnesium sulfate inorganic fibers having an average diameter of less than 1 µm.

2. The studless tire rubber composition according to claim 1, wherein an aspect ratio of the basic magnesium sulfate inorganic fibers is 5 or higher.

3. The studless tire rubber composition according to claim 2, wherein an average diameter of the basic magnesium sulfate inorganic fibers is 0.5 µm or more and less than 1 µm and an average length is from 5 µm to 50 µm.

4. The studless tire rubber composition according to claim 1, wherein a solubility of the basic magnesium sulfate inorganic fibers in water at 0°C is 0.05 g/L or less.

5. The studless tire rubber composition according to claim 1, wherein the polybutadiene rubber has a functional group at a terminal.

6. The studless tire rubber composition according to claim 1, wherein an average glass transition temperature of the studless tire rubber composition is - 60°C or lower.

7. The studless tire rubber composition according to claim 1, the studless tire rubber composition obtained by blending, per 100 parts by mass of the diene rubber containing 30 parts by mass or more of the polybutadiene rubber, 20 parts by mass or more of the inorganic filler and, with respect to the inorganic filler, from 10 to 40 mass% of the basic magnesium sulfate inorganic fibers having the average diameter of less than 1 µm, and by mixing at a temperature of 120°C or higher for 1 minute or longer.

8. A studless tire using the studless tire rubber composition according to claim 1 in a tread.
